Europäisches Patentamt

European Patent Office

Office européen des brevets

(19)

(11) Veröffentlichungsnummer: **0 226 923**
**B1**

(12) **EUROPÄISCHE PATENTSCHRIFT**

(45) Veröffentlichungstag der Patentschrift: **16.05.90**

(21) Anmeldenummer: **86117016.5**

(22) Anmeldetag: **08.12.86**

(51) Int. Cl.⁵: **B 05 D 1/42,** B 29 C 71/00, C 08 J 7/04

(54) **Verfahren zur Oberflächenausrüstung von Folien.**

(30) Priorität: **21.12.85 DE 3545591**

(43) Veröffentlichungstag der Anmeldung:
**01.07.87 Patentblatt 87/27**

(45) Bekanntmachung des Hinweises auf die
Patenterteilung:
**16.05.90 Patentblatt 90/20**

(84) Benannte Vertragsstaaten:
**AT BE CH DE ES FR GB IT LI NL SE**

(56) Entgegenhaltungen:
**DE-A-2 344 450**

(73) Patentinhaber: **Wolff Walsrode
Aktiengesellschaft
Postfach
D-3030 Walsrode 1 (DE)**

(72) Erfinder: **Rosenthal, Heinrich, Dipl.-Ing.
Nordsunderberg 5
D-3030 Walsrode (DE)**
Erfinder: **Schinkel, Ingo, Dipl.-Ing.
Witternstrasse 14
D-3030 Walsrode (DE)**

(74) Vertreter: **Zobel, Manfred, Dr. et al
c/o BAYER AG Konzernverwaltung RP
Patentabteilung Bayerwerk
D-5090 Leverkusen (DE)**

Courier Press, Leamington Spa, England.

# Beschreibung

Die Erfindung betrifft ein Verfahren zur Herstellung von oberflächenausgerüsteten, wenigstens monoaxial gereckten thermoplastischen Folien, wobei man vor wenigstens einer Reckstufe die Oberflächenausrüstung mit Hilfe eines Schlitzrakelsystems vornimmt und die anschließende Reckung oberflächenberührungsfrei durchführt.

Gemäß der DE-A-2 344 450, auf welcher der Oberbegriff des Anspruchs 1 basiert, wird eine Deckschicht durch Schmelzextrusion auf eine Grundfolie aufgetragen, wobei der Auftrag direkt auf die Folie erfolgt. Nachteilig hieraus ist, daß man niedrigviskose Stoffe nur schlecht auftragen kann und sehr geringe Schichtdicken kaum zu erreichen sind.

Das Schlitzrakelverfahren als Beschichtungsverfahren zur Herstellung von z.B. Klebebändern, Isolierbändern oder Haftetiketten ist bereits bekannt. Dabei werden sogenannte Hotmelts oder Schmelzkleber auf eine fertige Basisfolie aufgetragen, d.h. auf eine Folie, deren Zustand identisch ist mit dem im verwendungsfertigen Endprodukt. Der Nachteil einer solchen Verfahrensweise liegt in dem separaten Beschichtungsvorgang, zu dem die fertige Folie abgewickelt, einseitig beschichtet, nach dem Beschichten gekühlt und wieder aufgewickelt werden muß.

Überraschenderweise gelingt es nun, mit dem erfindungsgemäßen Verfahren nicht nur eine, sondern beide Oberflächen einer Folie auszurüsten und außerdem dies gleichzeitig, ohne separaten Arbeitsgang, d. h. während der Herstellung der Basisfolie durchzuführen und darüber hinaus auch noch eine bessere Haftung zwischen der Oberflächenbeschichtung und der Basisfolie durch die nachfolgende gemeinsame Reckung in mindestens eine Richtung zu erzielen.

Die vorliegende Erfindung betrifft ein Verfahren zur Herstellung von oberfächenausgerüsteten, wenigstens monoaxial gereckten, thermoplastischen Folien, dadurch gekennzeichnet, daß man vor wenigstens einer Reckstufe die Oberflächenausrüstung mit Hilfe von Schlitzrakelsystemen vornimmt, bei dem man die aufzutragenden Stoffe über eine Pumpe (2) zu dem Auftragskopf in Form einer Schlitzdüse (4) befördert, der vor einer Auftragswalze (5) auf diese zu horizontal verschiebbar angeordnet ist, daß man das Übertragen des aufzutragenden Materials von dem Auftragskopf (4) auf die Oberfläche der Auftragswalze (5) unter Bildung eines geschlossenen Filmes auf der Oberfläche der Auftragswalze vornimmt, daß man die Auftragswalze (5) mit einer Übernahme- und Kaschierwalze (7), die wiederum auf eine durchlaufende, in Maschinenrichtung gegebenenfalls gereckte Folie (8) den Oberflächenfilm überträgt in Kontakt bringt und daß man die nachfolgende Reckung der beschichteten Folie oberflächenberührungsfrei durchführt.

Das Verfahren ist besonders zur Herstellung oberflächenausgerüsteter, gereckter, thermoplastischer Polyolefinfolien, Polyesterfolien oder Polyamidfolien geeignet. Ganz besonders geeignet ist das erfindungsgemäße Verfahren zum Oberflächenauftrag auf Folien auf Basis von Propylenpolymerisaten, die anschließend noch wenigstens in eine Richtung, vorzugsweise biaxial gereckt werden. Insbesondere kann die erfindungsgemäße Verfahrensweise zur Herstellung solcher auch siegelbarer Folien angewendet werden, wobei vorzugsweise die Siegelschichten nach dem erfindungsgemäßen Verfahren aufgetragen werden.

Das erfindungsgemäße Verfahren bietet außerdem die Vorteile, daß durch die nach der Oberflächenausrüstung vorgenommene Reckung
— eine Vergleichmäßigung der aufgetragenen Materialschichten erfolgt
— extrem dünne Schichten (z.B. Primerschichten) wie sie durch eine separate Beschichtung nicht erreichbar sind, hergestellt werden können und
— daß, sofern die nachfolgende Reckung quer zur Maschinenlaufrichtung erfolgt, die Beschichtung nur auf einer relativ schmalen Oberfläche, d.h. der ursprünglichen Breite der ungereckten Folie vorgenommen werden muß.

Für den Auftrag mit Hilfe eines Schlitzrakelsystems eignen sich Hotmelts, Wachse, Polymere oder Mischungen dieser Stoffe mit Schmelzviskositäten bis 200 000 mPa.s, oder auch Trennmittel, wie z.B. Polydiorganosiloxane, wobei diese Materialien bei der Verarbeitungstemperatur eine Schmelzviskosität von wenigstens 2000 mPa.s, vorzugsweise 5000 bis 100 000 mPa.s, nach DIN 53019 aufweisen sollen. Sofern die aufzutragenden Materialien bei 25°C nicht flüssig sind, erfolgt der Auftrag aus der Schmelze. Es ist auch möglich, an sich bekannte, empfindliche oder heißsiegelbare Klebemassen, wie sie zur Herstellung von Klebebändern verwendet werden, nach dem erfindungsgemäßen Verfahren aufzutragen.

Besonders bevorzugt können nach dem erfindungsgemäßen Verfahren siegelbare Stoffe und/ oder Haftvermittler aufgetragen werden, die man bei der Herstellung gereckter, siegelbarer Mehrschichtfolien nicht durch übliche Verfahrensweisen wie Laminierung oder Coextrusion auftragen kann, da sie zu geringviskos sind, ein ungeeignetes Fließverhalten haben und/oder keine selbsttragenden Filme bilden können. Vorzugsweise sind dies Haftvermittler auf Basis modifizierter Polyolefine, wie olefinische (Co)polymerisate, gepfropft und/oder abgemischt mit Polyolefinen, oder Copolymerisate aus α-Olefinen wie Ethylen und weiteren α, ß ungesättigten Monomeren. Beispielhaft seien Ethylen/ Vinylazetatcopolymerisate oder Polyethylenimine genannt. Als Siegelmaterialien können nach dem erfindungsgemäßen Verfahren Acrylatcopolymerisate aufgetragen werden, vorzugsweise Copolymerisate aus Methylmethacrylat, Methylacrylat und Methacrylsäure.

Es ist ebenso möglich, Schmelzkleber auf der Basis von Polyvinylacetaten, Copolyamiden, Copolyestern, Polyurethanen oder Styrol/Butadien-Copolymerisaten nach dem erfindungsgemäßen Verfahren aufzutragen.

Das erfindungsgemäße Verfahren ermöglicht nicht nur eine kontinuierliche, vollflächige Oberflächenausrüstung, sondern auch einen streifenförmigen, punktförmigen und/oder intermittierenden Auftrag. Des weiteren können mit mehreren hintereinander arbeitenden Schlitzrakelsystemen Mehrschichtaufträge aus unterschiedlichen Stoffen ausgeführt werden.

Das bekannte Schlitzrakelsystem besteht im wesentlichen aus einem Auftragskopf (Schlitzdüse), wenigstens einer silikonbeschichteten Auftragswalze und einer Fördereinrichtung und gegebenenfalls einer Schmelzvorrichtung.

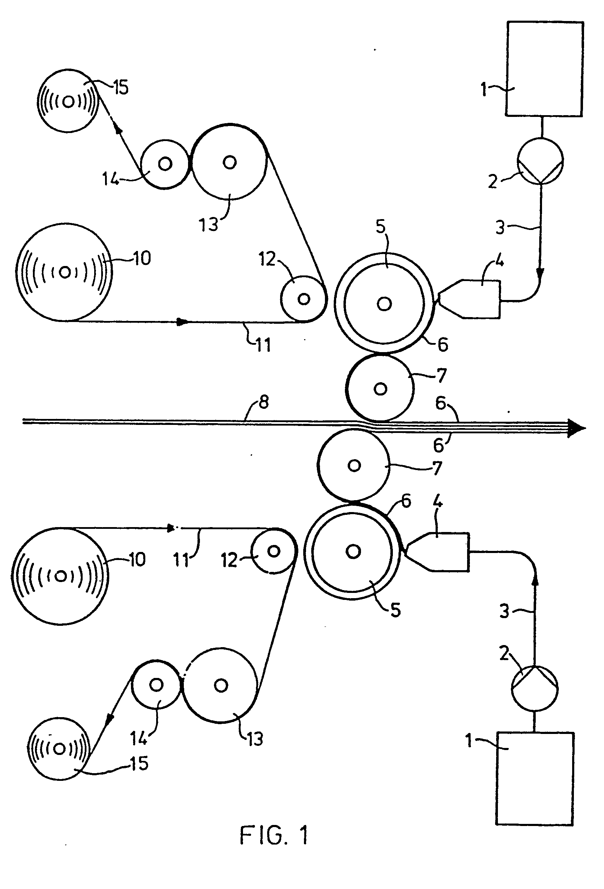

Das erfindungsgemäße Verfahren wird in Fig. 1 schematisch dargestellt.

Gemäß Fig. 1 werden in einem Vorrats- und gegebenenfalls Aufschmelzbehälter (1) die aufzutragenden Stoffe gegebenenfalls aufgeschmolzen und über eine Pumpe (2) durch einen gegebenenfalls ölbeheizten Schlauch (3) zu dem Auftragskopf (Schlitzdüse) (4) befördert, der vor einer Auftragswalze (5) horizontal verschiebbar angeordnet ist, wodurch der Abstand zwischen Auftragskopf (4) und der Auftragswalze (5) so eingestellt werden kann, daß das aufzutragende Material von dem Auftragskopf (4) direkt auf die Oberfläche der Auftragswalze (5) übertragbar ist. Dabei bildet es auf der Oberfläche der Auftragswalze einen geschlossenen Film, dessen Dicke durch die Umfangsgeschwindigkeit der Auftragswalze (5) und den Förderdruck des aufzutragenden Materials aus dem Auftragskopf (4) gesteuert werden kann. Die Auftragswalze (5) die vorzugsweise eine Silikonbeschichtung aufweist, wird mit einer Übernahme und Kaschierwalze (7) in Kontakt gebracht, die wiederum auf eine durchlaufende, in Maschinenrichtung gegebenenfalls gereckte Folie (8) den Oberflächenfilm überträgt. Mit einer gleichen Vorrichtung (Schlitzrakelsystem) kann auch die andere Oberfläche der fortlaufenden Folie (8) wie in Fig. 1 dargestellt beschichtet werden. Die auf diese Weise beidseitig mit Oberflächenauftrag ausgerüstete Folie (8) wird in einem nachfolgenden oberflächenberührungslosen Reckvorgang in bekannter Art und Weise vorzugsweise quer gereckt, wodurch die Ausgangsdicken der einzelnen Schichten der so hergestellten Mehrschichtfolie entsprechend dem Reckverhältnis reduziert werden.

Wie ebenfalls in Fig. 1 dargestellt, werden zur Einstellung eines, Sollwert entsprechenden und über die Breite gleichmäßigen Oberflächenauftrages, Auftragskopf (4) und Auftragswalze (5) von der Übernahme und Kaschieralz (7) und diese wiederum von der durchlaufenden Folie (8) gelöst und auf Abstand gefahren. Durch eine Wechselbetriebsstellung wird die Kontaktwalze (12) eines Trägerfolien- oder Papierführungssystems gegen die Auftragswalze (5) geschwenkt, übernimmt auf einer von der Rolle (10) abgezogenen Papier- oder Trägerfolienbahn (11) die Auftragsschicht (6) und führt diese über eine Kühlwalze (13) und eine Umlenkwalze (14) zu einer Aufrollstation (15). Ohne Störung des Produktionsprozesses können so Proben entnommen, kontrolliert und gegebenenfalls Änderungen der Einstellung im laufenden Herstellungsverfahren vorgenommen werden.

## Patentansprüche

1. Verfahren zur Herstellung von oberfächenausgerüsteten, wenigstens monoaxial gereckten, thermoplastischen Folien, dadurch gekennzeichnet, daß man vor wenigstens einer Reckstufe die Oberflächenausrüstung mit Hilfe von Schlitzrakelsystemen vornimmt, bei dem man die aufzutragenden Stoffe über eine Pumpe (2) zu dem Auftragskopf in Form einer Schlitzdüse (4) befördert, der vor einer Auftragswalze (5) auf diese zu horizontal verschiebbar angeordnet ist, daß man das Übertragen des aufzutragenden Materials von dem Auftragskopf (4) auf die Oberfläche der Auftragswalze (5) unter Bildung eines geschlossenen Filmes auf der Oberfläche der Auftragswalze vornimmt, daß man die Auftragswalze (5) mit einer Übernahme- und Kaschierwalze (7), die wiederum auf eine durchlaufende, in Maschinenrichtung gegebenenfalls gereckte Folie (8) den Oberflächenfilm überträgt in Kontakt bringt und daß man die nachfolgende Reckung der beschichteten Folie oberflächenberührungsfrei durchführt.

2. Verfahren gemäß Anspruch 1, dadurch gekennzeichnet, daß Folien auf Basis von Propylenpolymerisaten verwendet werden, die anschließend noch wenigstens in eine Richtung gereckt werden.

3. Verfahren nach wenistens einem der vorhergehenden Ansprüche, dadurch gekennzeichnet, daß Siegelschichten aufgetragen werden.

4. Verfahren nach wenistens einem der vorhergehenden Ansprüche, dadurch gekennzeichnet, daß Hotmelts, Wachse, Polymere oder Mischungen dieser Stoffe mit Schmelzviskositäten bis 200 000 mPas aufgetragen werden.

5. Verfahren nach wenistens einem der vorhergehenden Ansprüche, dadurch gekennzeichnet, daß Haftvermittler auf Basis modifizierter Polyolefine aufgetraten werden.

## Revendications

1. Procédé de fabrication de feuilles thermoplastiques à finition de surface, étirées de façon au moins mono-axiale, caractérisé en ce que l'on entreprend, avant au moins une étape d'étirage, la finition de surface à l'aide de systèmes à racloir à fente, en amenant les substances à appliquer par l'intermédiaire d'une pompe (2) à la tête d'application sous forme d'une buse à fente (4), qui est disposée devant un cylindre d'application (5) de façon horizontalement déplaçable par rapport à celui-ci, en ce que l'on entreprend le transfert du produit à appliquer de la tête d'application (4) sur la surface du cylindre d'application (5) avec formation d'un film fermé sur la surface du cylindre d'application, en ce que l'on amène en contact le cylindre d'application (5) avec un cylindre de transfert et de stratification (7) qui transmet à son tour le film superficiel sur une feuille (8) mobile, éventuellement étirée dans la direction de la machine, et en ce que l'on réalise l'étirage consécutif de la feuille revêtue sans contact superficiel.

2. Procédé selon la revendication 1, caractérisé en ce que l'on utilise des feuilles à base de polymères du propylène, que l'on étire ensuite encore au moins dans une direction.

3. Procédé selon au moins l'une des revendications précédentes, caractérisé en ce que l'on applique des couches de collage.

4. Procédé selon au moins l'une des revendications précédentes, caractérisé en ce que l'on applique des colles thermofusibles, des cires, des polymères ou des mélanges de ces produits avec des viscosités à l'état fondu de jusqu'à 200 000 mPa.s.

5. Procédé selon au moins l'une des revendications précédentes, caractérisé en ce que l'on applique des agents adhésifs à base de polyoléfines modifiées.

**Claims**

1. A process for the production of surface-finished, at least monoaxially stretched, thermoplastic films, characterized in that, before at least one stretching stage, surface finishing is carried out using slot knife coating systems in which the substances to be applied are delivered by a pump (2) to the applicator head in the form of a slot die (4) which is arranged in front of an applicator roll (5) for horizontal displacement towards said applicator roll, in that the material to be applied is transferred from the applicator head (4) to the surface of the applicator roll (5) to form a continuous film on the surface of the applicator roll, in that the applicator roll (5) is brought into contact with a take-over and laminating roll (7) which transfers the surface film to a continuous film (8) optionally stretched in the machine direction and in that the coated film is subsequently stretched without surface contact.

2. A process as claimed in claim 1, characterized in that films based on propylene polymers are used and are subsequently stretched in at least one direction.

3. A process as claimed in at least one of the preceding claims, characterized in that sealing layers are applied.

4. A process as claimed in at least one of the preceding claims, characterized in that hotmelts, waxes, polymers or mixtures thereof with melt viscosities of up to 200,000 mPas are applied.

5. A process as claimed in at least one of the preceding claims, characterized in that coupling agents based on modified polyolefins are used.

FIG. 1